# EUROPEAN PATENT APPLICATION

(11) **EP 4 840 835 A1**
(43) Date of publication of application: **18.11.2026**
(21) Application number: 25176445.2
(22) Date of filing: 14.05.2025
(51) Int. Cl.: C04B 28/08

(54) **FAYALITE SLAG-BASED BINDERS AND CONSTRUCTION MATERIALS**

(71) Applicant: Sika Technology AG, 6340 Baar (CH)
(72) Inventor: MARTIN, Charlene, 38070 Saint Quentin Fallavier (FR); LE SAINT, Guillaume, 38070 Saint Quentin Fallavier (FR); SOUDIER, Jerome, 38070 Saint Quentin Fallavier (FR)
(74) Representative: Sika Patent Attorneys

(57) **Abstract**

**Summary**

A binder for a construction material, comprises, in each case relative to the total dry weight of the binder:
a) a slag based binder **B,** said slag based binder **B** consisting of:
a1) at least one fayalite slag **S1,** preferably copper slag,
a2) at least one accelerator **A;**
a3) optionally a second slag **S2** which is chemically different from **S1,** preferably steelmaking slag, more preferably granulated blast furnace slag or ladle slag;

b) at least one co-binder **C;**
c) optionally admixtures.

## Description

### Technical Field

The present invention relates to a binder and a construction material based on a fayalite slag. In addition, the invention is related to the use of the binder or the construction material as a tile adhesive, a grouting mortar, a repair mortar, a masonry mortar, a waterproofing mortar, an anchoring mortar, a render, a screed, a self-levelling underlayment or self-levelling overlayment, a thin joint mortar, and/or a wall levelling compound. Furthermore, the invention is related to a structure, especially a tiled surface comprising a hardened binder or a hardened construction material as well as a method of tiling a surface.

### Background of the invention

Cement-based building materials, especially concrete or mortars, rely on cementitious materials as binders. Cementitious binders typically are mineral, hydraulic binders the most abundant of which are cements and especially Ordinary Portland Cement (OPC). However, the use of cements and especially of Ordinary Portland Cement has a high environmental footprint. One major reason are the high CO₂ emissions associated with the manufacture of cements. Many efforts have thus been made to at least partially replace cements as binders from building materials.

One possibility is the use of materials with cementitious properties, pozzolanes and/or latent hydraulic materials as cement replacement. An especially appealing material of this kind is slag as it is available as a by-product of various metallurgical processes, especially copper, iron and steelmaking, in large quantities.

A special type of slag is fayalite slag, which is a type of iron-rich, silicate-based slag that forms during non-ferrous metal smelting, especially in copper, lead, and nickel production. It is named after the mineral fayalite (Fe₂SiO₄), an iron silicate that commonly crystallizes in these slags.

A specific example of fayalite slag is copper slag. Copper slag is a by-product generated during the smelting and refining of copper. It is produced when molten slag, a mix of impurities separated from the copper ore, is quenched (rapidly cooled) and solidified.

So far, copper slag usually was mainly used as aggregate in mortar or concrete formulations due to its abrasion resistance.

It is known in the art that slags, if intended to be used as binder material, need to be activated.

In this regard, WO 2020/025691 A1 (Katholieke Universiteit Leuven) describes binders for mortar or concrete comprising a mixture consisting of: a) from 40 to 95 wt% of an Fe-comprising glass or Fe-comprising metallurgical slag, wherein the glass or slag comprises more than 30 wt% Fe, expressed as Fe₂O₃, b) from 1 to 40 wt% of a calcium comprising additive, wherein the additive comprises more than 30 wt% Ca, expressed as calcium oxide and c) from 0.5 to 20 wt% of an alkali, wherein the sum of the percentages of a) b) and c) in the mixture, calculated on a dry basis, is 100%.

However, there is still a need for improved solutions for binder composition and construction materials based thereof.

### Summary of the invention

It is an objective of the present invention to provide improved and/or environmental friendly binders or construction materials based on fayalite slag, especially copper slag. In particular, the binders or construction materials should exhibit strengths at early ages, e.g. after 1 to 7 days, as well as at later ages, e.g. after 28 days, as high as possible.

Especially preferred, construction materials should be obtainable that fulfill at least one requirement of at least one industry standard for construction materials such as e.g. industry standard EN 12004-1 for cementitious tile adhesives, EN 13888 for tile grouting materials, EN 13813 for self-levelling underlayments or self-levelling overlayments, EN 998-1 for render, EN 1504-3 for repair mortar, EN 998-2 and/or EN 206-1 for masonry mortar or concrete EN 13813 for screed, EN 1504-6 for non-shrink grout, EN 998-2 for thin joint mortar, EN 1504-2 for waterproofing mortar, also called surface protection systems for concrete, EN 1504-6 for anchoring mortar, EN 998-1 for wall levelling compounds for interior or exterior use, EAD ETICS 040083000404 for external thermal insulation composite systems.

Surprisingly it was found that a specific combination of a slag based binder based on fayalite slag and an accelerator in combination with a co-binder as defined in claim 1 can solve the objectives of the present invention.

The binder and construction material according to the present invention can be formulated to show rather high strengths at early ages as well as at later ages. Furthermore, the binder and construction materials can comprise high proportions of fayalite slag, which in turn reduces the environmental footprint or the CO₂ emissions associated with the manufacture of the binder and construction materials, respectively. The present invention also enables the use of waste, i.e. slag, that would otherwise have to be disposed of unused.

Especially, it is possible to formulate binders and construction materials that are essentially free of Ordinary Portland cement. In this case, for example, fayalite slag can be used as the main binder in construction materials.

However, it is possible as well, to use fayalite slag in combination with Ordinary Portland cement. Thereby, fayalite slag is used as secondary cementitious material, which allows for significantly reducing the proportions of Portland cement in construction materials.

The binders according to the invention can be used in a variety of ways, e.g. as binder in tile adhesives, grouting mortars, repair mortars, masonry mortars, waterproofing mortars, anchoring mortars, renders, screeds, self-levelling underlayment or self-levelling overlayments, thin joint mortars, and/or wall levelling compounds.

Further aspects of the present invention are the subject of independent claims. Especially preferred embodiments are the subject of dependent claims and/or outlined throughout the following description.

### Ways for carrying out the invention

In a first aspect, the present invention relates to a binder for a construction material, the binder comprising or consisting of, in each case relative to the total dry weight of the binder:
a) 30 - 85 wt.%, preferably 40 - 82 wt.%, especially 50 - 80 wt.%, of a slag based binder **B,** said slag based binder **B** consisting of:
   a1) at least one fayalite slag **S1,** preferably copper slag,
   a2) at least one accelerator **A** selected from the group consisting of alkanolamines, reducing agents, sugars, sugar acids, carboxylic acids or their salts, amino acids or their salts, polyols, sulfamic acid, glyoxal, acetylacetone, pyrocatechol, nitrilotri(methylphosphonic acid), etidronic acid, and/or mineral salts; the mineral salts being selected from alkaline metal or earth alkaline metal nitrates, alkaline metal or earth alkaline metal nitrites, alkaline metal or earth alkaline metal chlorides, alkaline metal sulfates, alkaline metal or earth alkaline metal carbonates, aluminum chloride, and/or aluminum sulfate;
   a3) optionally a second slag **S2** which is chemically different from fayalite slag **S1,** preferably steelmaking slag, more preferably granulated blast furnace slag or ladle slag,
b) 10 - 70 wt.%, preferably 18 - 60 wt.%, especially 20 - 50 wt.%, of at least one co-binder C, said co-binder C being different from the slag based binder B and said co-binder C being selected from the group consisting of cement, calcium sulfate, lime, calcined magnesia, caustic magnesia, calcium aluminates, alumina, latent hydraulic binders, and/or pozzolanes;
c) optionally 0.01 - 12 wt.%, more preferably 0.05 - 6 wt.%, of admixtures.

Fayalite slag is a type of iron-rich, silicate-based slag that forms during non-ferrous metal smelting, especially in copper, lead, and nickel production. It is named after the mineral fayalite (Fe₂SiO₄), an iron silicate that commonly crystallizes in these slags. Fayalite slag typically contains fayalite (Fe₂SiO₄), silica (SiO₂), iron oxides (FeO, Fe₂O₃), and small amounts of alumina (Al₂O₃), calcium oxide (CaO), magnesia (MgO), and possibly trace metals depending on the ore (e.g. Cu, Zn, Pb).

Steelmaking slag within the present context is a by-product from the steelmaking process. Within the present context also iron slags, and especially furnace slags, are considered as steelmaking slags. Steelmaking slag can be any slag resulting from the making of steel. Especially, steelmaking slag is any of granulated blast furnace slag (GBBS), basic oxygen furnace slag (BOF slag), ladle slag or electric arc furnace slag. In contrast to fayalite slag, steelmaking slag usually is rich in calcium oxide and comprises smaller amounts of iron oxides.

The slag(s) used in the binder according to the invention preferably is/are particulate material(s). It may be obtained by crushing, milling, and/or sieving the slag to a desired fineness.

When slags react with water, a hydration reaction occurs, and different mineral phases are being formed. Thereby, water and slag are consumed, hardening proceeds and strength is developed.

Especially, relative to the total weight of the slag based binder **B,** a proportion of the fayalite slag **S1,** preferably copper slag, in the slag based binder **B** is at least 60 wt.%, preferably at least 80 wt.%, especially at least 95 wt.%.

According to a preferred embodiment, the fayalite slag **S1** is a copper slag.

For example, the fayalite slag, especially copper slag, comprises:
- 30 - 70 wt.%, especially 38 - 50 wt.% Fe₂O₃ and/or FeO;
- 10-50 wt.%, especially 18 - 30 wt.%, SiO₂;
- 0 - 30 wt.%, 1 - 12 wt.%, Al₂O₃;
- 0 -10 wt.%, 0.5 - 5 wt.%, CaO.

Preferably, with respect to the weight of the fayalite slag **S1,** the fayalite slag **S1** comprises:
- less than 50 wt.% Fe₂O₃ and/or FeO; and/or
- more than 24 wt.% SiO₂; and/or
- more than 2 wt.% of Al₂O₃.

More preferably, with respect to the weight of the fayalite slag **S1,** the fayalite slag **S1** comprises:
- less than 46 wt.%, especially less than 43 wt.%, Fe₂O₃ and/or FeO; and/or
- more than 27 wt.%, especially more than 28 wt.%, silica, SiO₂;and/or
- more than 3 wt.%, especially more than 6 wt.%, of Al₂O₃.

Especially, with respect to the weight of the fayalite slag **S1,** the fayalite slag **S1** comprises:
- from 38 wt.% to less than 46 wt.%, especially less than 43 wt.%, Fe₂O₃ and/or FeO; and/or
- more than 27 wt.% to 50 wt.%, especially more than 28 wt.% to 30 wt.%, silica, SiO₂; and/or
- more than 3 wt.% to 30 wt.%, especially more than 6 wt.% to 12 wt.%, of Al₂O₃.

A mean particle size D50 of the fayalite slag **S1** preferably is in the range of 1 - 20 µm, especially 3 - 10 µm, in particular 4 - 7 µm.

The mean particle size D50 means that 50% of the particles have a size less than the specified number or 50% of the particles have a size greater than the given number. The particle size can be measured using laser diffraction, as described in ISO 13320:2009. In particular, a Mastersizer 2000 device with a Hydro 2000G dispersion unit and the Mastersizer 2000 software from Malvern Instruments GmbH (Germany) is used. Isopropanol is a suitable measuring medium. Preferably, the particle size of non-spherical or irregular particles is represented by the equivalent spherical diameter of a sphere with the same volume.

According to embodiments, a slag based binder **B** of the present invention comprises a second slag **S2,** which is chemically different from the fayalite slag **S1.** Chemically different means that the chemical composition and/or the phase composition of said second slag **S2** is different from the slag **S1.**

For example, the optional second slag **S2,** if present, is steelmaking slag and/or ground granulated blast furnace slag with a chemical composition of 25 - 60 w% CaO, 2 - 50 w% SiO₂, 2 - 35 w% of Al₂O₃, 0 - 15 w% of Fe₂O₃, 0 - 10 w% of MgO, and 0 - 7 w% of SO₃. Very preferably, the second slag **S2** is a steelmaking slag and/or ground granulated blast furnace slag, which is essentially amorphous, preferably with a content of amorphous phases of 70 - 100 wt.%.

Preferably, the amount of a second slag **S2,** especially of ground granulated blast furnace slag, is less than 15 wt.%, more preferably less than 10 wt.%, relative to the total weight of the slag-based binder **B.** It is particularly preferred that the slag based binder **B** does not contain any second slag **S2.**

The accelerators **A** for the reaction of fayalite slag **S1** and the optional second slag **S2** with water are selected from the group consisting of alkanolamines, reducing agents, sugars, sugar acids, carboxylic acids and their salts, amino acids and their salts, polyols, sulfamic acid, glyoxal, acetylacetone, pyrocatechol, nitrilotri(methylphosphonic acid), etidronic acid, mineral salts, or mixtures thereof.

In particular, relative to the total weight of the slag based binder **B,** a proportion of the at least one accelerator **A** is from 0.01 - 10 wt.%, especially 0.1 - 5 wt.%.

The at least one accelerator **A** of the present invention can be added to a construction material as an aqueous preparation, preferably as a preparation in the mixing water. Especially preferable, the at least one accelerator **A** is dissolved and/or dispersed in the mixing water.

The at least one accelerator **A** of the present invention can be added to a construction material in the form of a solid preparation. Especially preferable, the at least one accelerator **A** is adsorbed onto the surface of a solid support material such as for example diatomaceous earth, clay, calcined clay, and/or a filler as described below.

The at least one accelerator **A** of the present invention can be co-grinded with the fayalite slag **S1,** the optional second slag **S2** and/or with the co-binder **C.** Co-grinding preferably is done during the manufacture of the slag(s) and/or the co-binder **C.**

According to embodiments, in a construction material of the present invention the at least one accelerator **A** is co-ground with the at least one fayalite slag **S1.**

One type of suitable accelerators are alkanolamines. Alkanolamines are preferably selected from the group consisting of monoethanolamine, diethanolamine, triethanolamine (TEA), diethanolisopropanolamine (DEIPA), ethanoldiisopropanolamine (EDIPA), isopropanolamine, diisopropanolamine, triisopropanolamine (TIPA), N-methyldiisopropanolamine (MDIPA), N-methyldiethanolamine (MDEA), tetrahydroxyethylethylenediamine (THEED), and tetrahydroxyisopropylethylenediamine (THIPD), as well as mixtures of two or more of these alkanolamines.

Preferred alkanolamines are triethanolamine (TEA), triisopropanolamine (TIPA), diethanolisopropanolamine (DEIPA), and ethanoldiisopropanolamine (EDIPA).

Especially preferred alkanolamines are diethanolisopropanolamine (DEIPA), ethanoldiisopropanolamine (EDIPA), and triisopropanolamine (TIPA).

Another type of suitable accelerators are sugars. A "sugar" in the sense of the present invention is a carbohydrate having an aldehyde group. In particularly preferred embodiments, the sugar belongs to the group of monosaccharides or disaccharides. Examples of sugars include, but are not limited to, glyceraldehyde, threose, erythrose, xylose, lyxose, ribose, arabinose, allose, altrose, glucose, mannose, gulose, idose, galactose, tallose, fructose, sorbose, lactose, maltose, sucrose, lactulose, trehalose, cellobiose, chitobiose, isomaltose, palatinose, mannobiose, raffinose, and xylobiose. Sugars can also be used in the form of dextrines, vinasse, or molasse. Both, d and I-form of sugars are likewise preferred. Especially preferred sugars are fructose, mannose, maltose, glucose, galactose, dextrines, vinasse, and molasses.

Another type of suitable accelerators are sugar acids or their salts. A "sugar acid" in the context of the present invention is a monosaccharide having a carboxyl group. It may belong to any of the classes of aldonic acids, ursonic acids, uronic acids or aldaric acids. Preferably, it is an aldonic acid. Examples of sugar acids useful in connection with the present invention include, but are not limited to gluconic acid, ascorbic acid, neuraminic acid, glucuronic acid, galacturonic acid, iduronic acid, mucilic acid and saccharic acid. The sugar acid may be in the form of the free acid or as a salt. According to embodiments, salts of sugar acids may be salts with metals of groups Ia, IIa, Ib, IIb, IVb, VIIIb of the periodic table of elements. Preferred salts of sugar acids are salts of alkali metals, alkaline earth metals, iron, cobalt, copper or zinc. Especially preferred are salts with sodium, potassium, and calcium. Both, d- and I-form of sugar acids are likewise preferred. An especially preferred sugar acid is gluconic acid and its salts, especially sodium gluconate.

Another type of suitable accelerators are amino acids or their salts. Amino acids preferably are selected from the group consisting of glycine, lysine, glutamate, glutamic acid, aspartic acid, polyaspartic acid, methionine, nitrilotriacetic acid (NTA), iminodisuccinic acid, methylglycine-N,N-diacetic acid, and N,N-bis(carboxylatomethyl)glutamic acid, ethylenediamine disuccinic acid (EDDS), ethylenediamine tetraacetic acid (EDTA), hexamethylendiamine tatraacetic acid (HEDTA), diethylenetriamine pentaacetic acid (DTPA) or their salts. Especially preferred are salts of alkali metals or alkaline earth metals. In particular, salts are selected from the group consisting of tetrasodium N,N-bis(carboxylatomethyl)glutamate, trisodium methylglycine-N,N-diacetate, tetrasodium iminodisuccinate (IDS), trisodium ethylenediamine disuccinate, tetrasodium ethylenediamine tetraacetate, and tetrasodium hexamethylendiamine tetraacetate.

Another type of suitable accelerators are carboxylic acids or their salts. The term "carboxylic acid" means any organic molecule with a carboxylic acid or carboxylate group, except sugar acids as described above or amino acids as described above. Especially preferred carboxylic acids are formic acid, glycolic acid, citric acid, lactic acid, malic acid, tartaric acid, oxalic acid, malonic acid, succinic acid, glutaric acid, adipic acid, and salicylic acid. The carboxylic acid may be in the form of the free acid or in the form of a salt. According to embodiments, salts of carboxylic acids may be salts with metals of groups la, IIa, Ib, IIb, IVb, VIIIb of the periodic table of elements. Preferred salts of sugar acids are salts of alkali metals, alkaline earth metals, iron, cobalt, copper or zinc. Especially preferred are salts with sodium, potassium, and calcium. Preferred salts of carboxylic acids are calcium malonate, calcium succinate, calcium lactate, potassium citrate, and sodium citrate. Throughout this invention, where reference is made to a multibasic acid, the salts thereof are meant to encompass mono-, di-, tri- and higher salts. For example, the term sodium citrate is meant to encompass monosodium citrate, disodium citrate, and trisodium citrate.

Another type of suitable accelerators are reducing agents. Within the present context reducing agents are materials with a reduction potential measured under standard conditions against a standard reference hydrogen half-cell of below 0.77 V. That is, suitable reducing agents have a half-cell potential lower than the couple Fe³⁺/Fe²⁺. Reducing agents are preferably selected from the group consisting of thiosulfates, thiocyanates, and sulfides, preferably from sodium thiosulfate or potassium sulfide. Reducing agents within the present context do not belong to any of the groups of alkanolamines, sugars, sugars, sugar acids, carboxylic acids and their salts, or amino acids and their salts as described above.

Another type of suitable accelerators are polyols. Especially suitable polyols within the present context are pentaerythritol, glycerol, and 1,1,1-tris(hydroxymethyl)ethane.

Other suitable accelerators are sulfamic acid, glyoxal, acetylacetone, pyrocatechol, nitrilotri(methylphosphonic acid), and etidronic acid.

Another type of suitable accelerators are mineral salts. Within the present context mineral salts are salts selected from the group consisting of alkaline metal or earth alkaline metal nitrates, alkaline metal or earth alkaline metal nitrites, alkaline metal or earth alkaline metal chlorides, alkaline metal sulfates, alkaline metal or alkaline earth metal carbonates, aluminum chloride, and/or aluminum sulfate.

Especially preferred mineral salts are sodium sulfate, calcium nitrite, calcium nitrate, calcium chloride, magnesium chloride, aluminum sulfate, and aluminum chloride.

Particularly preferred, the at least one accelerator **A** comprises calcium chloride, sodium carbonate, calcium formate, aluminum sulfate, and/or one or more alkanolamine(s).

According to a further preferred embodiment, the at least one accelerator **A** comprises diethanolisopropanolamine and/or triisopropanolamine, especially triisopropanolamine. The diethanolisopropanolamine or triisopropanolamine may be present in an amount of 0.05 - 0.6 wt.%, preferably 0.1 - 0.6 wt.%, relative to the total weight of the slag based binder **B.**

Another preferred mineral salt useful as accelerator is calcium carbonate, in particular very fine calcium carbonate such as precipitated calcium carbonate (PCC) or ultrafine calcium carbonate (UFCC). Particularly suitable PCC of the present invention has an average particle size d50 of between 0.01 - 2 µm, preferably 0.05 - 0.1 µm, measured according to standard ISO 13320:2009. Particularly suitable PCC of the present invention has a BET surface of at least 10 m²/g, preferably at least 15 m²/g, for example 17 - 25 m²/g. Particularly suitable ultrafine calcium carbonate has an average particle size of between 0.01 - 500 µm, preferably 0.05 - 400 µm, more preferably 0.1 - 350 µm, still more preferably 2 - 300 µm. In particular, the average particle size d50 is > 10 µm and/or the particle size d98 > 250 µm. Particularly suitable UFCC of the present invention has a Blaine surface as measured according to standard DIN 66126 of at least 1000 m²/kg.

A co-binder **C** within the present context is an inorganic binder selected from the group consisting of cement, calcium sulfate, lime, calcined magnesia, caustic magnesia, calcium aluminates, alumina, latent hydraulic binders, and/or pozzolanes. The co-binder **C** is different from the slag based binder **B.** Especially, the co-binder **C** does not comprise slag, especially does not comprise fayalite slag and/or steelmaking slag, in particular GGBS.

Cements can in particular be Portland cements of type CEM I, CEM II, CEM III, CEM IV, and CEM V as described in standard EN 197-1:2011, calcium aluminate cements as described in standard EN 14647:2006, and/or calcium sulfoaluminate cements (CSA). The term "calcium sulfate" is meant to encompass CaSO₄ in various forms, in particular CaSO₄ anhydrite, CaSO₄ α- and β- hemihydrate, CaSO₄ dihydrate, and gypsum. The term "lime" is meant to encompass natural hydraulic lime, formulated lime, hydraulic lime, and air lime as described in the standard EN 459-1:2015. The term "alumina" stands for aluminum oxides, aluminum hydroxides, and/or aluminum oxy-hydroxides such as gibbsite and boehmite, calcined or flash calcined alumina, alumina resulting from the Bayer process, hydratable alumina such as amorphous mesophase alumina and rho phase alumina. Pozzolanes and latent hydraulic materials preferably are selected from the group consisting of crude clay, calcined clay, especially metakaolin, kiln dust, microsilica, fly ash, pyrogenic silica, precipitated silica, silica fume, sodocalcic glass, borocalcic glass, zeolite, rice husk ash, burnt oil shale, and natural pozzolane such as diatomaceous earth, pumice and trass. Pozzolanes and latent hydraulic binders do not encompass fayalite slag and steelmaking slags within the present context. Calcium aluminates within the present context are not calcium aluminate cements, in particular because calcium aluminates do not contain silicon dioxide and/or iron oxides in substantial amounts. Preferably, calcium aluminates comprise silicon dioxide and iron oxides in a combined amount of less than 15 w%. Calcium aluminates especially are selected from the group consisting of amorphous calcium aluminates and calcium aluminate hydroxides.

Clay within the present context are solid materials composed to at least 30 wt.%, preferably to at least 35 w%, especially to at least 75 w%, each relative to its dry weight, of clay minerals. Such clay minerals preferably belong to the kaolin group (such as kaolinite, dickite, nacrite or halloysite), the smectite group (such as montmorillonite, nontronite or saponite), the vermiculite group, serpentine, palygorskite, sepiolite, chlorite, talc, pyrophyllite, micas (such as biotite muscovite, illite, glauconite, celadonite, and phengite), minerals resulting from leaching and weathering of sedimentary or metamorphic rock such as laterites or mixtures thereof. Crude clays are clay minerals extracted from e.g. a quarry, optionally purified and optionally dried. Calcined clays especially are low-temperature calcined clays that have been thermally treated at temperatures between 500 - 1200°C or in a flash calcination process at temperatures between 800 - 1100 °C. A suitable flash calcination process is for example described in WO 2014/085538. A low-temperature calcined clay is an anhydrous material.

According to especially preferred embodiments of the present invention, the calcined clay is metakaolin. Metakaolin is a material resulting from the low-temperature calcination of kaolinite or minerals that are rich in kaolinite, e.g. have a content of kaolinite of at least 30 wt.%, preferably to at least 35 wt.%, relative to its dry weight. Calcination temperatures for the manufacturing of metakaolin typically are in the range of 500 - 900 °C.

Similar to the second slag **S2,** the co-binder **C,** especially pozzolanes, preferably crude clay or calcined clay, can be used to control the volume expansion of a construction material of the present invention.

Preferably, a calcium sulfoaluminate cement (CSA) of the present invention is a cement comprising a clinker comprising C₄(A₃₋ₓFₓ)$ (C: CaO; A: Al₂O₃; F: Fe₂O₃; $: SO₃) where x is an integer of from 0 - 3. CSA of the present invention typically comprise further phases selected from aluminates (CA, C₃A, C₁₂A₇ with C: CaO; A: Al₂O₃), belite (C₂S with C: CaO, S: SiO₂), ferrites (C₂F, C₂AF, C₄AF, with C: CaO; A: Al₂O₃; F: Fe₂O₃), ternesite (C₅S₂$ with C: CaO, S: SiO₂; $: SO₃) and anhydrite. According to certain embodiments CSA of the present invention contains 15-75 w% C₄A₃$, 0-10 wt.% aluminates, 0-70 wt.% belite, 0-35 wt.% ferrites, 0-20 wt.% ternesite, and 0-20 wt.% anhydrite, each based on the total dry weight of the CSA cement. Suitable CSA can, for example, be commercially obtained from Heidelberg Cement AG, Buzzi Unicem or under the tradename Calumex from Caltra B.V.

The co-binder **C** preferably is selected from lime, calcium sulfate, calcium aluminates, and/or cement.

According to a further preferred embodiment, the co-binder **C** comprises at least two different co-binder materials, whereby, preferably, the at least two different co-binder materials comprise (i) lime in combination with calcium sulfate and/or calcium sulfoaluminate cement and/or calcium aluminate cement and/or calcium aluminates; or (ii) calcium sulfate in combination with calcium sulfoaluminate cement and/or calcium aluminate cement and/or calcium aluminates. Thereby, especially, anhydrite is used as the calcium sulfate.

Especially, a weight ratio of the first of the at least two different co-binder materials to the second of the at least two different co-binder materials is 0.5 - 2, especially 0.8 - 1.5, in particular 0.9 - 1.1.

Thereby, preferably, the co-binder comprises lime and calcium sulfate and a weight ratio of lime and calcium sulfate is 0.5 - 2, especially 0.8 - 1.5, in particular 0.9 - 1.1.

Also preferred are embodiments with a co-binder comprising calcium sulfate and calcium sulfoaluminate cement and/or calcium aluminate cement and a weight ratio of calcium sulfate to calcium sulfoaluminate cement and/or calcium aluminate cement is 0.25 - 1.5, especially 0.3 - 1.0, in particular 0.4 - 0.6.

The binder of the present invention optionally comprises between 0.01 - 12 wt.%, more preferably 0.05 - 6 wt.% of admixtures. According to embodiments, admixtures are selected from the list consisting of plasticizers, superplasticizers, shrinkage reducers, air entrainers, de-aerating agents, stabilizers, viscosity modifiers, thickeners, water reducers, retarders, water resisting agents, hydrophobic agents, fibers, blowing agents, defoamers, redispersible polymer, dedusting agents, chromate reducers, pigments, biocides, corrosion inhibitors, and steel passivating agents. Admixtures within the present meaning are not accelerators as defined above.

Thickeners may especially be selected from cellulosic materials such as modified cellulose, especially cellulose ethers such as hydroxypropylmethyl cellulose, hydroxyethylmethyl cellulose, hydroxyethyl cellulose, methylhydroxyethyl cellulose, and methylhydroxypropyl cellulose. Water retention agents may especially be selected from superabsorbent polymers, sheet silicates, or starches, especially modified starches. Superplasticizers can especially be lignosulphonates, polyacrylates, or polycarboxylate ethers.

According to embodiments, the admixture comprises or consists of a hydrophobic agent present in an amount so that a dosage of from 0.05 - 0.3 wt.% of the hydrophobic agent, relative to the total dry weight of the construction material, results. Preferred hydrophobic agents are metal soaps, for example metal salts of stearic acid, oleic acid, or capric acid, silanes, siloxanes, silicones, silicate resins, fine wax emulsions, and bitumen emulsions.

According to embodiments, the admixture comprises or consists of at least one redispersible polymer and/or at least one cellulose ether, and/or at least one modified starch, and/or at least one plasticizer.

Especially, the redispersible polymer is present in the form of a redispersible polymer powder. The term redispersible polymer refers to a material which contains a polymer and after introduction into water forms a stable dispersion. A redispersible polymer encompasses not only the polymer but typically also mixtures thereof with e.g. protective colloids, emulsifiers, and support materials. Redispersible polymer powders can be manufactured for example, by spray drying of polymer dispersions as for example described in patent application EP1042391. Suitable redispersible polymers and redispersible polymer powders are for example available from Wacker Chemie AG under the trade name Vinnapas.

The redispersible polymer preferably is a copolymer of two or more of the following monomers: ethylene, propylene, butylene, isoprene, butadiene, styrene, acrylonitrile, acrylic acid, methacrylic acid, esters of acrylic acid, esters of methacrylic acid, vinylesters, vinylchloride. Preferred redispersible polymers are copolymers of vinylacetate and ethylene, vinylacetate and vinylchloride and ethylene, vinylacetate and ethylene and methylmethacrylate, vinylacetate and ethylene and vinylester, vinylacetate and ethylene and acrylic acid ester, vinylchloride and ethylene and vinyllaureate, vinylacetate and vinylversatate, acrylic ester and styrene, acrylic ester and styrene and butadiene, acrylic ester and acrylonitrile, styrene and butadiene, acrylic acid and styrene, methacrylic acid and styrene, styrene and acrylic acid ester, styrene and methacrylic acid ester.

According to embodiments, the at least one redispersible polymer is selected from copolymers of vinylacetate, vinylchloride, and/or ethylene, the at least one cellulose ether is a methylhydroxyethyl cellulose ether, the at least one modified starch is a starch ether, and the at least one plasticizer is a polycarboxylate ether or a polyacrylate.

According to embodiments, a binder for a construction material, relative to the total dry weight of the binder, comprises:
- 50 - 80 wt.%, especially 55 - 78 wt.%, of the fayalite slag, especially copper slag;
- 0.1 - 5 wt.%, especially 1 - 4 wt.%, of calcium chloride, sodium carbonate, calcium formate, sodium citrate, aluminum sulfate, and/or one or more alkanolamine(s);
- 10 - 49 wt.%, especially, 18 - 40 wt.%, of the at least one co-binder C, especially calcium sulfate, lime, calcium aluminate cement, calcium sulfoaluminate cement, and/or calcium aluminates;
- Preferably, the co-binder **C** comprises two different co-binder materials, whereby a weight ratio the first to the second co-binder material is 0.5 - 2, especially 0.8 - 1.5, in particular 0.9 - 1.1.

According to embodiments, a binder for a construction material, relative to the total dry weight of the binder, comprises:
- 50 - 80 wt.%, especially 55 - 78 wt.%, of the fayalite slag, especially copper slag;
- 0.1 - 5 wt.%, especially 1 - 4 wt.%, of calcium chloride, sodium carbonate, calcium formate, aluminum sulfate, sodium citrate, and/or one or more alkanolamine(s);
- 7 - 25 wt.%, of a first co-binder selected from, especially calcium sulfate, lime, calcium aluminate cement, calcium sulfoaluminate cement, and/or calcium aluminates;
- 7 - 25 wt.%, of a second co-binder, which is different from the first co-binder, especially calcium sulfate, lime, calcium aluminate cement, calcium sulfoaluminate cement, and/or calcium aluminates;
- whereby a weight ratio the first to the second co-binder is 0.5 - 2, especially 0.8 - 1.5, in particular 0.9 - 1.1.

According to embodiments, a binder for a construction material, relative to the total dry weight of the binder, comprises:
- 50 - 80 wt.%, especially 55 - 78 wt.%, of the fayalite slag, especially copper slag;
- 0.1 - 5 wt.%, especially 1 - 4 wt.%, of calcium chloride, sodium carbonate, calcium formate, aluminum sulfate, and/or one or more alkanolamine(s);
- 7 - 25 wt.%, of a first co-binder selected from calcium sulfate, lime, calcium aluminate cement, calcium sulfoaluminate cement, and/or calcium aluminates, especially lime;
- 7 - 25 wt.%, of a second co-binder, which is different from the first co-binder, selected from calcium sulfate, lime, calcium aluminate cement, calcium sulfoaluminate cement, and/or calcium aluminates, especially calcium sulfate, calcium aluminate cement and/or calcium sulfoaluminate cement;
- whereby a weight ratio the first to the second co-binder is 0.5 - 2, especially 0.8 - 1.5, in particular 0.9 - 1.1.

A further aspect of the present invention is concerned with a construction material, especially a tile adhesive, comprising a binder as described above and at least one aggregate and/or filler.

Preferably, the construction material comprises 10 - 70 wt.% of the binder and 30 - 90 wt.% of the at least one aggregate and/or filler, whereby the wt.% are with respect to the total weight of the construction material.

Aggregates can be any material that is non-reactive in the hydration reaction of hydraulic binders. Aggregates can be any aggregate typically used for construction materials. Typical aggregates are for example rock, crushed stone, crushed concrete, gravel, sand, especially quartz sand, river sand and/or manufactured sand, glass, expanded glass, hollow glass beads, glass ceramics, quarry wastes, porcelain, electro fused or sintered abrasives, firing support, silica xerogels, bio sourced aggregates such as hemp and/or sunflower.

Aggregates useful for the present invention can have any shape and size typically encountered for such aggregates. An especially preferred aggregate is sand. Sand is a naturally occurring granular material composed of finely divided rock or mineral particles. It is available in various forms and sizes. Examples of suitable sands are quartz sand, limestone sand, river sand or crushed aggregates. Suitable sands are for example described in standards ASTM C778 or EN 196-1.

Fillers are characterized by a small particle size. Especially, fillers are selected from fine calcium carbonate, ground limestone, ground dolomite, and/or ground aluminum oxide, and/or non-reactive slags. Non-reactive means that slags useful as fillers do not react with water in hydration reactions. Slags suitable as fillers typically are treated in a way that leads to hydroxylation and/or carbonization of free lime. For example, the free lime content of a slag suitable as filler is < 2% according to standard EN 459-2.

It is possible to use more than one aggregate and more than one filler also in combination.

The construction material may be a tile adhesive, a grouting mortar, a repair mortar, a masonry mortar, a waterproofing mortar, an anchoring mortar, a render, a screed, a self-levelling underlayment or self-levelling overlayment, a thin joint mortar, and/or a wall levelling compound.

In particular, a tile adhesive of the present invention conforms to one of the classes C1, C1E, C1F, C1FT, C2, C2E, C2F, C2S1, C2S2, C2FT, C2FTS1 according to standard EN 12004-1:2017.

In particular, the construction material may be a particulate material, especially present in dry state. In this case the construction material may be a ready-mix composition.

Any of the construction materials of the above embodiments can be mixed with water to prepare a wet and/or processable construction material, such as e.g. a mortar.

Thus, according to another preferred embodiment, the construction material comprises water in an amount to realize a mass ratio of water : dry constituents between 0.1 - 0.6. Other suitable mass ratio of water to dry constituents can be from 0.1 - 0.45, preferably 0.2 - 0.45 or 0.1 - 0.25.

According to embodiments, a construction material, with respect to the total weight of the construction material, comprises:
- 5 - 15 wt.%, especially 8 - 13 wt.%, copper slag, especially copper slag comprising 38 - 50 wt.% Fe₂O₃ and/or FeO; 10 - 50 wt.%, especially 18 - 30 wt.%, SiO₂; 0 - 30 wt.%, 1 - 12 wt.%, Al₂O₃; 0 - 10 wt.%, 0.5 - 5 wt.%, CaO;
- 0.01 - 10 wt.%, especially 0.1 - 5 wt.%, of calcium chloride, sodium carbonate, calcium formate, sodium sulfate, aluminum sulfate, and/or one or more alkanolamine(s), especially calcium formate;
- 10 - 20 wt.%, especially 14 - 18 wt.%, cement, preferably Portland cement, especially of type CEM II;
- 0.01 - 12 wt.%, more preferably 0.05 - 6 wt.%, at least one redispersible polymer and/or at least one cellulose ether, and/or at least one modified starch, and/or at least one plasticizer; especially 0.2 - 3 wt.% of a redispersible polymer, particularly a copolymer of vinylacetate, vinylchloride, and ethylene, and 0.05 - 1 wt.% of at least one thickener, especially, cellulose, in particular methylhydroxyethyl cellulose ether;
- 60 - 80 wt.%, especially 65 - 75 wt.%, of aggregates, especially sand;
- Optionally water in an amount to realize a mass ratio of water: dry constituents between 0.1 - 0.6, preferably 0.1 - 0.45, more preferably 0.2 - 0.45 or 0.1 - 0.25.

Such construction materials, for example, can be used as a tile adhesive.

Another aspect of the present invention is related to the use of a binder as described above or a construction material as described above as a tile adhesive, a grouting mortar, a repair mortar, a masonry mortar, a waterproofing mortar, an anchoring mortar, a render, a screed, a self-levelling underlayment or self-levelling overlayment, a thin joint mortar, and/or a wall levelling compound.

All features described as preferred above also apply to this aspect.

In another aspect, the present invention relates to a method of tiling a surface comprising the steps of:
(i) providing a binder or a construction material as described above,
(ii) mixing the construction material with water in a weight ratio of water to dry construction material in the range of 0.1 - 0.6,
(iii) applying the mixture obtained in step (ii) to said surface;
(iv) applying a tile to the assembly obtained in step (iii) while the mixture is still wet,
(v) optionally hardening the assembly obtained in step (iv).

All features described as preferred above also apply to this aspect.

According to embodiments, the weight ratio of water to dry construction material in step (ii) is adjusted to control the rheology of the resulting mixture. A higher amount of water will lead to a more flowable mixture and a lower amount of water to a more pasty mixture. Methods and devices for mixing of the construction material with water are not particularly limited and are known to the person skilled in the art. Mixing can be continuously, semi-continuously or batch-wise. Continuous mixing offers the advantage of a high material throughput.

It is possible to apply the mixture in step (iii) by any means known to the person skilled in the art. According to one embodiment, the mixture in step (iii) is applied by trowel, brush or roller. According to another embodiment, the mixture in step (iii) is applied in a spray application. Spray applications have the advantage that the application can be done very quickly and in a continuous manner. Suitable equipment for such spray applications is known to the person skilled in the art.

It is possible, in step (iii) to additionally apply the mixture on the tile side intended to be in contact with said surface

Hardening proceeds with time and physical properties, e.g. compressive strength, adhesion strength, etc. are developed thereby. A construction composition of the present invention will harden at various temperatures when mixed with water. It is, however, preferred to do the hardening in step (v) at temperatures between +4 °C and +50 °C, preferably between +5 °C and +35 °C.

It is possible to include further steps in a method of tiling of the present invention. Further steps may be cleaning the substrate and priming the substrate.

In another aspect the present invention relates to a structure, especially a tiled surface, comprising a hardened binder or a hardened construction material described above.

A tiled surface structure in particular is obtainable with a method as described above.

A tiled surface in particular is part of a building. Especially the tiled surface can be part of basement walls, floor structures, drainages, pipes, silos, stairs, bathrooms, kitchens, swimming pools, balconies, terraces, ponds or basins, harbor structures and works of civil engineering, e.g. tunnels.

The following examples provide the skilled person with further details and embodiments of the present invention.

### Working examples

### Materials

For the experiments, the following slags were used (unless otherwise specified, the numbers are in wt.%):

| Type | Fe₂O₃ | SiO₂ | Al₂O₃ | CaO | others | D50 |
|---|---|---|---|---|---|---|
| CS1¹⁾ | 40.8 | 29.3 | 8.6 | 2.6 | 18.7 | 7.3 µm |
| CS2²⁾ | 45.2 | 25.4 | 2.9 | 3.4 | 23.1 | 6.9 µm |
| CS3³⁾ | 48.7 | 26.6 | 8.8 | 3.2 | 12.7 | 6.4 µm |

| | | | | | | |
|---|---|---|---|---|---|---|
| ¹⁾ obtained from Boliden (Sweden) ²⁾ obtained from Boliden (Sweden) ³⁾ obtained from Aurubis (Germany) | | | | | | |

Additionally, a Ground Granulated Blast Furnace Slag (GGBS) from Ecocem (Dunkerque) was used.

Further materials used are:
- Triisopropanolamine (TIPA), trisodium citrate, calcium chloride, calcium formate, sodium sulfate, sodium carbonate were purchased from Sigma-Aldrich in high purity and used as received.
- Anhydrite was of type Sulfacal AH Micro A F (Saint-Gobain, France).
- Lime was of type Tradical^{®} H90 (LHOIST, France)
- OPC was of type CEM II/A-LL 52.5 R.
- CSA was a calcium sulfoaluminate cement of type Alpenat (Vicat, France)
- CAC was a calcium aluminate cement of type TERNAL RG (Imerys, France)
- Sand was of type PE2LS marketed by Fulchiron Industrielle SAS
- Modified cellulose was a methylhydroxyethyl cellulose
- RDP was a redispersible polymer powder based on a copolymer of vinyl acetate, vinyl chloride, and ethylene.

### Methods

For the preparation of binders and mortars, dry constituents were mixed in the amounts indicated in the following tables 1 - 2 until visually homogeneous. TIPA and trisodium citrate were pre-mixed in the mixing water and thus added together with the mixing water in the amount indicated in following tables 1 - 3. Mixing of dry mix and mixing water was effected for 2 min at a controlled speed of 200 - 300 rpm in an IKA mixer.

Flexural strength was measured on prismatic samples (1.5 x 1.5 x 4.5 cm) cured in plastic molds covered in plastic bags at 22°C for the time indicated in below tables 1 - 3. Before testing, samples are demolded and sanded. Flexural strength is measured in a three-point bending test on two supports placed 25 mm apart with a center force applied at a rate of 1 mm/min.

### Results

**Table 1: Examples 1 - 7 (binder pastes; * = not according to invention)**

| | **1*** | **2*** | **3*** | **4** | **5** | **6*** | **7** |
|---|---|---|---|---|---|---|---|
| CS3 [g] | 100 | 100 | 70 | 68.6 | 67.8 | 60 | 60 |
| Lime [g] | | | 30 | 29.4 | 29.0 | 20 | 20 |
| Anhydrite [g] | | | | | | 20 | 20 |
| TIPA [g] | | 0.7 | | | | | 0.4 |
| CaCl₂ [g] | | | | | 3.2 | | |
| Na₂CO₃ [g] | | | | 2 | | | |
| Water | 25 | 24.3 | 36 | 36 | 36 | 36 | 35.6 |
| Flexural strength 23°C/1 d [MPa] | Soft | Soft | Soft | 0.55 | Soft | Soft | 0.2 |
| Flexural strength 23°C/7d [MPa] | Soft | Soft | 0.56 | 2.42 | 1.16 | 0.82 | 1.61 |
| Flexural strength 23°C/28d [MPa] | Soft | Soft | 1.53 | 2.31 | 2.30 | 4.70 | 5.53 |

It can be seen from the results table 1 that copper slag alone (example 1), copper slag in combination with an accelerator (TIPA; example 2) or copper slag in combination with a co-binder (lime; example 3) results in very low flexural strength at all ages. However, if copper slag is combined with a co-binder (lime) and an accelerator (CaCl₂, sodium carbonate; examples 4 and 5) the flexural strength is significantly improved. Likewise, example 7 comprising copper slag, two different co-binders (lime, anhydrite) and an accelerator (TIPA) performs better than example 6 without accelerator, in particular at earlier ages.

**Table 2: Examples 8 - 14 (binder pastes; * = not according to invention)**

| | **8** | **9** | **10** | **11** | **12** | **13*** | **14** |
|---|---|---|---|---|---|---|---|
| CS3 [g] | 58.1 | 58.8 | 58.1 | 77.4 | 58.8 | | |
| CS1 [g] | | | | | | 70 | 70 |
| Lime [g] | 19.4 | 19.6 | 19.4 | 9.7 | 19.6 | | |
| Anhydrite [g] | 19.4 | 19.6 | 19.4 | 9.7 | 19.6 | 10 | 10 |
| CSA [g] | | | | | | 20 | 20 |
| Trisodium citrate [g] | | | | | | | 1.8 |
| CaCl₂ [g] | 3.2 | | | | | | |
| Calcium formate [g] | | | 3.2 | 3.2 | | | |
| Na₂CO₃ [g] | | 2 | | | | | |
| Al₂(SO₄)₃ [g] | | | | | 2 | | |
| Water | 36 | 36 | 36 | 36 | 36 | 25 | 25 |
| Flexural strength 23°C/1 d [MPa] | Soft | Soft | Soft | Soft | 0.03 | 2.56 | 3.37 |
| Flexural strength 23°C/7d [MPa] | 1.67 | 1.51 | 2.22 | 1.91 | 1.45 | 4.2 | 3.4 |
| Flexural strength 23°C/28d [MPa] | 6.79 | 5.55 | 9.37 | 7.14 | 5.55 | 5.6 | 4.0 |

As evident from table 2, other accelerators can also be used in combination with copper slag and the co-binders lime and anhydrite (examples 8 - 12) to improve the flexural strength when compared with example 6.

The same is true for a system based on a different copper slag in combination with co-binders consisting of anhydrite and CSA. Such compositions even without accelerator show a higher flexural strength at earlier times (example 13), which can be further improved by the addition of accelerator such as trisodium citrate (example 14).

Further binders and dry mortars were mixed as outlined above with the constituents and amounts as indicated in below table 3. Different from the above procedure, mixes were prepared by mixing the dry mixes with water for 1.5 min at slow speed settings in a Hobart mixer.

Initial adhesion strength, adhesion strength after heat ageing, and adhesion strength after water immersion were measured in accordance with standard EN 1348:2007. Adhesion strength after 20 min open time was measured in accordance with standard EN 1346:2007.

**Table 3: Examples M1 - M3 (Mortar compositions; * = not according to invention)**

| | **M1*** | **M2** | **M3** |
|---|---|---|---|
| CS1 [g] | | 10.8 | |
| CS2 [g] | | | 10.8 |
| OPC [g] | 16.2 | 16.2 | 16.2 |
| GGBS [g] | 10.8 | | |
| RDP [g] | 1 | 1 | 1 |
| Modified cellulose [g] | 0.25 | 0.25 | 0.25 |
| Calcium formate [g] | 0.6 | 0.6 | 0.6 |
| Salt | 0.8 | 0.8 | 0.8 |
| Sand | 70.4 | 70.4 | 70.4 |
| Water | 21 | 21 | 21 |
| Initial adhesion strength, 23°C/28d [MPa] | 1.21 | 1.47 | 1.51 |
| Adhesion strength, 20 min open time, 23°C/28d [MPa] | 0.92 | 0.81 | 0.82 |
| Adhesion strength, heat ageing 14/14d [MPa] | 1.23 | 1.40 | 1.39 |
| Adhesion strength, water immersion, 7/21d [MPa] | 1.08 | 1.15 | 0.91 |

It can be seen from the results in table 3 that mortars based on copper slag/cement clearly perform better in terms of initial adhesion strength, adhesion strength after water immersion and adhesion strength after heat ageing (examples M2 and M3), when compared with a mortar based in GGBS/cement (example M1).

Mortar compositions as shown in table 3 can fulfil industry standard EN 12004-1 for cementitious tile adhesives and thus are highly suitable for tiling of surfaces.

## Claims

1. A binder for a construction material, the binder comprising, in each case relative to the total dry weight of the binder:
a) 30 - 85 wt.%, preferably 40 - 82 wt.%, especially 50 - 80 wt.%, of a slag based binder **B,** said slag based binder B consisting of:
a1) at least one fayalite slag **S1,** preferably copper slag,
a2) at least one accelerator A selected from the group consisting of alkanolamines, reducing agents, sugars, sugar acids, carboxylic acids or their salts, amino acids or their salts, polyols, sulfamic acid, glyoxal, acetylacetone, pyrocatechol, nitrilotri(methylphosphonic acid), etidronic acid, and/or mineral salts; the mineral salts being selected from alkaline metal or earth alkaline metal nitrates, alkaline metal or earth alkaline metal nitrites, alkaline metal or earth alkaline metal chlorides, alkaline metal sulfates, alkaline metal or earth alkaline metal carbonates, aluminum chloride, and/or aluminum sulfate;
a3) optionally a second slag **S2** which is chemically different from the fayalite slag **S1,** preferably steelmaking slag, more preferably granulated blast furnace slag or ladle slag;
b) 10 - 70 wt.%, preferably 18 - 60 wt.%, especially 20 - 50 wt.%, of at least one co-binder **C,** said co-binder C being different from the slag based binder B and said co-binder C being selected from the group consisting of cement, calcium sulfate, lime, calcined magnesia, caustic magnesia, calcium aluminates, alumina, latent hydraulic binders, and/or pozzolanes;
c) optionally, 0.01 - 12 wt.%, more preferably 0.05 - 6 wt.%, of admixtures.

2. The binder according to claim 1, whereby, relative to the total weight of the slag based binder **B,** a proportion of the fayalite slag **S1,** preferably copper slag, in the slag based binder B is at least 60 wt.%, preferably at least 80 wt.%, especially at least 95 wt.%.

3. The binder according to any of preceding claims, whereby, with respect to the weight of the fayalite slag **S1,** the fayalite slag **S1** comprises 38 - 50 wt.% Fe₂O₃ and/or FeO; 18 - 30 wt.% SiO₂; 1 - 12 wt.% Al₂O₃ and 0.5 - 5 wt.%, CaO.

4. The binder according to any of preceding claims, whereby, relative to the total weight of the slag based binder **B,** a proportion of the at least one accelerator A is from 0.01 - 10 wt.%, especially 0.1 - 5 wt.%.

5. The binder according to any of preceding claims, whereby, the at least one accelerator A comprises calcium chloride, sodium carbonate, calcium formate, sodium sulfate, aluminum sulfate, and/or one or more alkanolamine(s), whereby, preferably, the one or more alkanolamine(s) is selected from diethanolisopropanolamine and/or triisopropanolamine, especially triisopropanolamine.

6. The binder according to any of preceding claims, whereby the co-binder C is selected from lime, calcium sulfate, calcium aluminates, and/or cement.

7. The binder according to any of preceding claims, whereby the co-binder C comprises at least two different co-binder materials, whereby the at least two different co-binder materials comprise (i) lime in combination with calcium sulfate and/or calcium sulfoaluminate cement and/or calcium aluminate cement and/or calcium aluminates; or (ii) calcium sulfate in combination with calcium sulfoaluminate cement and/or calcium aluminate cement and/or calcium aluminates.

8. The binder according to claim 6, whereby the co-binder comprises lime and calcium sulfate and a weight ratio of lime and calcium sulfate is 0.5 - 2, especially 0.8 - 1.5, in particular 0.9 - 1.1; or the co-binder comprises calcium sulfate and calcium sulfoaluminate cement and/or calcium aluminate cement and a weight ratio of calcium sulfate to calcium sulfoaluminate cement and/or calcium aluminate cement is 0.25 - 1.5, especially 0.3 - 1.0, in particular 0.4-0.6.

9. The binder according to any of preceding claims, whereby the admixture comprises at least one redispersible polymer and/or at least one cellulose ether, and/or at least one modified starch, and/or at least one plasticizer.

10. A construction material, especially a tile adhesive, comprising a binder according to any of preceding claims, and at least one aggregate and/or filler, comprising 10 - 70 wt.% of the binder and 30 - 90 wt.% of the at least one aggregate and/or filler, whereby the wt.% are with respect to the total weight of the construction material.

11. The construction material according to claim 10, comprising, with respect to the total weight of the construction material:
- 5 - 15 wt.%, especially 8 - 13 wt.%, copper slag, especially copper slag comprising 38 - 50 wt.% Fe₂O₃ and/or FeO; 10 - 50 wt.%, especially 18 - 30 wt.%, SiO₂; 0 - 30 wt.%, 1 - 12 wt.%, Al₂O₃; 0 - 10 wt.%, 0.5 - 5 wt.%, CaO;
- 0.01 - 10 wt.%, especially 0.1 - 5 wt.%, of calcium chloride, sodium carbonate, calcium formate, sodium sulfate, aluminum sulfate, and/or one or more alkanolamine(s), especially calcium formate;
- 10 - 20 wt.%, especially 14 - 18 wt.%, cement, preferably Portland cement, more preferably CEM II;
- 0.01 - 12 wt.%, more preferably 0.05 - 6 wt.%, at least one redispersible polymer and/or at least one cellulose ether, and/or at least one modified starch, and/or at least one plasticizer; especially 0.2 - 3 wt.% of a redispersible polymer, particularly a copolymer of vinylacetate, vinylchloride, and ethylene, and 0.05 - 1 wt.% of at least one thickener, especially, cellulose, in particular methylhydroxyethyl cellulose ether;
- 60 - 80 wt.%, especially 65 - 75 wt.%, of aggregates, especially sand;
- Optionally water in an amount to realize a mass ratio of water: dry constituents between 0.1 - 0.6, preferably 0.1 - 0.45, more preferably 0.2 - 0.45 or 0.1 - 0.25.

12. The binder according to any of claims 1 - 9 or the construction material according to any of claims 10 - 11, comprising water in an amount to realize a mass ratio of water: dry constituents between 0.1 - 0.6.

13. Use of a binder according to any of claims 1 - 9 or 12 or of a construction material as claimed in any of claims 10 - 12 as a tile adhesive, a grouting mortar, a repair mortar, a masonry mortar, a waterproofing mortar, an anchoring mortar, a render, a screed, a self-levelling underlayment or self-levelling overlayment, a thin joint mortar, and/or a wall levelling compound.

14. A method of tiling a surface comprising the steps of:
(i) providing a binder according to any of claims 1 - 9 or a construction material as claimed in at least one of claims 10 - 11;
(ii) mixing the construction material with water in a weight ratio of water to dry construction material in the range of 0.1 - 0.6;
(iii) applying the mixture obtained in step (ii) to said surface,
(iv) applying a tile to the assembly obtained in step (iii) while the mixture is still wet,
(v) optionally hardening the assembly obtained in step (iv).

15. A structure, especially a tiled surface, comprising a hardened binder according to any of claims 1 - 9 or 12 or comprising a hardened construction material as claimed in any of claims 10 - 12.
